# EUROPÄISCHE PATENTANMELDUNG

(11) **EP 3 058 816 A1**
(43) Veröffentlichungstag der Anmeldung: **24.08.2016**
(21) Anmeldenummer: 16155478.7
(22) Anmeldetag: 12.02.2016
(51) Int. Cl.: A01K 5/02

(54) **RAUFUTTERSPENDER**

(30) Priorität: 19.02.2015 DE 202015100783 U
(71) Anmelder: Schlütken, Heinz-Josef, 49832 Freren (DE)
(72) Erfinder: Schlütken, Heinz-Josef, 49832 Freren (DE)
(74) Vertreter: Werner & ten Brink

(57) **Zusammenfassung**

Die Erfindung ist ein Raufutterspender (10), der sich gut reinigen lässt, einfach zu montieren und zu warten sowie preiswert in der Herstellung ist, welcher einen zentralen, zur Aufnahme des Raufutters bestimmten und bodenseitig geschlossenen Korpus (12) aufweist, wobei der Korpus (12) in seiner Mantelfläche am bodenseitigen Ende zumindest eine Öffnung (22) aufweist und wobei die oder jede Öffnung (22) im Korpus (12) mittels eine relativ zum Korpus (12) axial beweglichen Schieber (24) ganz oder teilweise verschließbar ist.

Signifikante, zur Veröffentlichung mit der Zusammenfassung vorgesehene Figur:

## Beschreibung

Die Erfindung betrifft eine im Folgenden kurz als Raufutterspender bezeichnete Vorrichtung zum Abgeben von Raufutter an Nutzvieh, insbesondere Schweine, in einem Stall oder Stallabschnitt.

Als Raufutter werden bekanntlich sogenannte Grundfuttermittel oder Wirtschaftsfutter mit einem relativ hohen Gehalt an strukturierter Rohfaser bezeichnet. Bei Heu oder Stroh handelt es sich um trockenes Raufutter, das ein Landwirt oftmals auf seinem eigenen Betrieb erzeugt. Derartiges trockenes Raufutter hat zwar einen vergleichsweise niedrigen Futterwert, aufgrund des recht geringen Markwerts und der wegen des vergleichsweise großen Volumens eher ungünstigen Transportfähigkeit wird Raufutter im Allgemeinen zumindest in Ergänzung zu sogenanntem Kraftfutter oder dergleichen zugefüttert.

Die Fütterung mit Raufutter kann erfolgen, indem das Raufutter schlicht in den Stall oder den jeweiligen Stallabschnitt - im Folgenden zusammenfassend als Box bezeichnet -, insbesondere dort in die jeweiligen Futtertröge gegeben wird. Eine Zugabe von Raufutter mittels eines Raufutterspenders hat den Effekt, dass das Raufutter auch als Beschäftigungsmaterial fungiert. Dies erhält aufgrund der Tier-wohlinitiative des Einzelhandels, die im Mai 2015 starten soll, derzeit besondere Bedeutung.

Ein zur Beschäftigung von Schweinen mit einem Gewichtsbereich von 25 kg bis 150 kg bestimmter Raufutterspender wird von dem Unternehmen Meier-Brakenberg GmbH & Co. KG, Extertal unter der Bezeichnung "Porky's Fun Box" angeboten. Bei diesem bekannten Raufutterspender handelt es sich um einen Korpus in Form einer einseitig offenen Tonne, die an einem Arm frei hängend in der jeweiligen Box angebracht wird und sich von oben mit Raufutter, hier Stroh, befüllen lässt. An ihrem unteren Ende weist die Tonne in der Mantelfläche regelmäßig beabstandete Öffnungen auf, durch die das im Innern der Tonne befindliche Stroh nach außen ragen und/oder von einem Schwein herausgezogen werden kann. Eine wirksame Größe der Öffnungen ist einstellbar. Damit soll eine Anpassung an verschiedene Stroharten möglich und gleichzeitig erreichbar sein, dass die Schweine jeweils nur einzelne Halme aus der Tonne entnehmen. Die Einstellbarkeit der wirksamen Größe der Öffnungen wird bei dem bekannten Raufutterspender mittels eines an der Unterseite der Tonne angebrachten Verstellrings erreicht. Der Verstellring hat einen eigenen Boden und einen ringförmigen Rand. Mittels des Bodens wird der Verstellring drehbar am Boden der Tonne angebracht. Der ringförmige Rand des Verstellrings umgreift dabei einen unteren Abschnitt der Mantelfläche der Tonne. Der ringförmige Rand weist fluchtend mit den Öffnungen in der Mantelfläche der Tonne und in gleicher Anzahl eigene Öffnungen auf. Zur Unterscheidung und im Interesse einer besseren Lesbarkeit werden die Öffnungen in der Mantelfläche der Tonne in Folgenden als innere Öffnungen und die Öffnungen in dem relativ zur Tonne drehbaren Verstellring als äußere Öffnungen bezeichnet. Eine Größe der äußeren Öffnungen in dem ringförmigen Rand des Verstellrings nimmt ausgehend von einer maximalen Größe, die der Größe der inneren Öffnungen entspricht, in Umfangsrichtung ab. Wenn der äußere Verstellring relativ zu der Tonne so gedreht ist, dass die äußeren Öffnungen im Bereich ihrer maximalen Größe mit den inneren Öffnungen fluchten, resultiert eine maximale wirksame Größe der Öffnungen zum Innern der Tonne. Wenn der Verstellring gedreht wird, so dass ein zunehmend kleinerer Abschnitt der äußeren Öffnungen mit den inneren Öffnungen fluchtet, deckt der ringförmige Rand des Verstellrings die inneren Öffnungen zumindest teilweise ab, so dass kleinere wirksame Öffnungen zum Innern der Tonne resultieren.

Der bekannte Raufutterspender scheint insoweit verbesserungsfähig, als dieser bei Gebrauch, also bei Benutzung im Stall, recht stark verschmutzt und die Verschmutzungen relativ schwer zu entfernen sind.

Davon ausgehend besteht eine Aufgabe der vorliegenden Erfindung darin, einen verbesserten Raufutterspender anzugeben, insbesondere einen Raufutterspender, der durch seine Bauart geringer zu Verschmutzungen neigt und/oder sich leicht reinigen lässt.

Diese Aufgabe wird erfindungsgemäß mit einem Raufutterspender, der auch als Strohautomat bezeichnet werden kann, mit den Merkmalen des Anspruchs 1 gelöst. Dazu ist bei einem Raufutterspender mit einem zentralen, zur Aufnahme des Raufutters, insbesondere Raufutters in Form von Stroh, zum Beispiel geschnittenem Stroh, zum Beispiel sogenanntes Kälberstroh oder Stroh mit einer Halmlänge von bis zu ca. 10 cm, bestimmten und bodenseitig geschlossenen Korpus, wobei der Korpus in seiner Mantelfläche am bodenseitigen Ende zumindest eine als Entnahmeloch fungierende Öffnung aufweist, vorgesehen, dass der Raufutterspender einen relativ zum Korpus axial beweglichen Schieber umfasst, wobei mittels des Schiebers in Abhängigkeit von dessen axialer Position die oder jede Öffnung (das oder jedes Entnahmeloch) ganz oder teilweise verschließbar ist.

Der Vorteil der Erfindung besteht darin, dass sich aufgrund der axialen Beweglichkeit des Schiebers - im Gegensatz zum Beispiel zu dem drehbaren Verstellring des eingangs erwähnten bekannten Raufutterspenders - nur zwischen dem Korpus und der zum Korpus gewandten Fläche des Schiebers Schmutz ansammeln kann, der eventuell schwerer zu beseitigen ist. Tatsächlich ist auch das Entfernen von dort angesammeltem Schmutz relativ einfach, denn der eventuell verschmutzte Abschnitt wird unmittelbar zugänglich, wenn der Schieber ausreichend weit axial verschoben wird. Bei dem eingangs genannten Raufutterspender, dessen Verstellring drehbar am Boden des dortigen Korpus angebracht ist, ergibt sich zwischen der Außenseite der Bodenfläche des Korpus und der dieser zugewandten Innenoberfläche des Verstellrings ein Zwischenraum, der zum Reinigen schwer zugänglich ist und dessen Zugänglichkeit sich auch nicht mit der jeweiligen Rotationslage des Verstellrings ändert.

Aus der WO 2013/140407 A1 ist ein Spielgerät für Tiere bekannt, bei dem mittels eines drehbaren Rings Löcher in einer Mantelfläche eines zylindrischen Gehäuses freigegeben werden, so dass beim Spielen mit dem Gerät im Innern des Gehäuses platziertes Futter herausfallen kann oder in sonstiger Weise für das Tier erreichbar wird. In der US 2008/0083378 A ist ein Spielgerät mit einer ähnlichen Lösung zur Freigabe von im Innern des Gerätes und dessen zylindrischem Gehäuse platziertem Futter beschrieben. Das Gehäuse umfasst einen inneren und einen äußeren Zylinder. Die beiden Zylinder sind relativ zueinander drehbar. Dadurch lassen sich Löcher in beiden Zylindern in fluchtende Übereinstimmung bringen, so dass eine Öffnung zum Innern des Geräts und dem dort befindlichen Futter frei wird. Aus der AT 375 241 ist schließlich ein Gerät bekannt, bei dem unter einem Vorratsbehälter, welcher in seinem Boden Öffnungen aufweist, ein mittels eines Betätigungshebels beweglicher plattenförmiger Verschlusskörper angebracht ist, der im unbetätigten Zustand des Hebels die Bodenöffnung verschließt und diese bei Betätigung freigibt. Keine der Dokumente WO 2013/140407 A1, US 2008 / 0083378 A und AT 375 241 zeigt einen Futterspender der hier vorgeschlagenen Art mit einem axial beweglichen Schieber.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Raufutterspenders ist vorgesehen, dass der Schieber innen im Korpus angebracht ist. Bei einem innen am Korpus angebrachten Schieber schützt der Korpus selbst den Schieber und einen Bereich zwischen Schieber und Korpus vor Verschmutzung. Zudem ist der Schieber im Innern des Korpus optimal gegen Beschädigungen geschützt.

Bei einer besonderen Ausführungsform des Raufutterspenders ist vorgesehen, dass dieser einen zylindrischen Korpus und einen ebenfalls zylindrischen Schieber aufweist, wobei der Schieber koaxial zum Korpus angebracht ist und beim axialen Bewegen auf der Außenoberfläche des Korpus oder der Innenoberfläche des Korpus läuft. Die zylindrische Form von Korpus und Schieber, speziell die zylindrische Form des Korpus, verleiht dem Raufutterspender eine ausgezeichnete Stabilität, wie sie beim Einsatz im Stall sinnvoll ist, wenn die Tiere den pendelnden Raufutterspender hin- und herstoßen und dieser dabei zum Beispiel an eine Seitenwand der Box stößt. Die runde Form hilft dabei auch, ansonsten zu besorgende Verletzungen der Tiere zu vermeiden. Zudem vermeidet die runde Form auch Beschädigungen an der Box, wenn dieser gegen eine von deren Seitenwänden stößt. Indem der Schieber auf der Außenoberfläche oder - bei einer Anbringung im Innern des Korpus - auf der Innenoberfläche des Korpus läuft, der Schieber also formschlüssig an den Korpus angepasst ist, bewirkt das formschlüssige Anliegen des Schiebers an der jeweiligen Oberfläche des Korpus, dass kaum ein Zwischenraum zwischen Schieber und Korpus verbleibt, in den Schmutz eindringen könnte und dass eine axiale Bewegung des Schiebers eine mechanische Säuberung der von der Bewegung erfassten Oberfläche des Korpus bewirkt.

Ein derartiger Raufutterspender mit einem zylindrischen Korpus und einem ebenfalls zylindrischen Schieber lässt sich besonders einfach und kostengünstig fertigen, wenn der zylindrische Schieber aus einem Rohrabschnitt mit demselben oder im Wesentlichen demselben Durchmesser wie der Korpus gefertigt ist, wobei die resultierende Zylindermantelfläche des Schiebers in axialer Richtung aufgetrennt ist und wobei der Schieber zur axialen Bewegung auf der Außenoberfläche des Korpus aufgespreizt und um die Außenoberfläche des Korpus gelegt ist oder zur axialen Bewegung auf der Innenoberfläche des Korpus gestaucht und im Innern des Korpus an dessen Innenoberfläche angelegt ist. Die formschlüssige Anpassung des Schiebers an die jeweilige Fläche des Korpus ergibt sich dabei gewissermaßen inhärent aufgrund der federnden Eigenschaft des axial getrennten und als Schieber fungierenden Rings, vergleichbar mit einer Situation wie dies bei einem Sprengring oder dergleichen gegeben ist.

Bei einem Raufutterspender mit zum Beispiel einem wie oben beschrieben in axialer Richtung getrennten Schieber führt die Federspannung oftmals zu einer ausreichenden Fixierung des Schiebers in der jeweiligen axialen Position. Bei einer besonderen Ausführungsform des Raufutterspenders ist vorgesehen, dass dieser Mittel zum Fixieren des Schiebers in unterschiedlichen axialen Positionen aufweist. Als Beispiel für derartige Mittel oder ein derartiges Mittel kommt zum Beispiel eine Schraube oder ein Splint oder dergleichen in Betracht, die bzw. der durch eine Bohrung im Korpus und eine mit dieser fluchtenden Bohrung im Schieber geführt wird, um den Schieber in axialer Richtung in der jeweiligen Position zu fixieren. Eine Mehrzahl von Bohrungen entweder im Schieber oder im Korpus erlaubt eine entsprechende Mehrzahl von axialen Positionen, in denen der Schieber auf diese Weise fixierbar ist. Eine besonders günstige Möglichkeit in dieser Hinsicht besteht in der Verwendung eines Federstifts, so dass eine ansonsten verwendete Schraube oder ein ansonsten verwendeter Splint nicht vollständig entfernt werden muss und stattdessen der Federstift durch eine Bohrung im Korpus oder im Schieber in eine entsprechende Bohrung im Schieber bzw. im Korpus federnd eingreift.

Bei einer besonderen Ausführungsform eines Raufutterspenders mit Mitteln zum Fixieren des Schiebers in unterschiedlichen axialen Positionen fungiert eine Klemmvorrichtung als Mittel zum axialen Fixieren des Schiebers. Diese presst den Schieber auf die Oberfläche des Korpus, nämlich entweder auf die Außenoberfläche oder gegen die Innenoberfläche. Mittels einer solchen Klemmvorrichtung ist eine stufenlose Fixierung des Schiebers in der jeweiligen axialen Position möglich. Mit der stufenlosen Fixierbarkeit des Schiebers lässt sich die wirksame Größe der Öffnungen im Korpus, also die wirksame Größe der Entnahmelöcher, ebenfalls stufenlos einstellen.

Wenn die Klemmvorrichtung mittels zumindest einer Schraube lösbar und arretierbar ist, ergibt sich eine einfache, kostengünstige und leicht zu wartende Klemmvorrichtung. Bei einem im Innern des Korpus axial beweglichen Schieber liegt zum Beispiel der Schraubenkopf der mindestens einen Schraube an der Außenoberfläche des Korpus an und der Gewindeabschnitt der mindestens einen Schraube verläuft durch den Schlitz, welcher den Schieber trennt. Am Ende der Schraube ist eine Gewindemutter aufgesetzt. Beim Anziehen der Gewindemutter kommt diese mit dem Schieber in Kontakt und bewirkt beim weiteren Anziehen ein Anpressen des Schiebers an die Innenoberfläche des Korpus. Die Klemmwirkung der Klemmvorrichtung kann noch verbessert werden, wenn zusätzlich zu der Gewindemutter eine Unterlegscheibe oder dergleichen mit einem ausreichend großen Radius verwendet wird, so dass beim Anziehen der Mutter eine möglichst großflächige Kraftübertragung auf den Schieber resultiert. Zusätzlich oder alternativ zu einer solchen Unterlegscheibe kommt auch ein als Widerlager fungierendes Element, zum Beispiel ein Blechstück oder Flacheisen, in Betracht.

Bei einer speziellen Ausführungsform des Raufutterspenders weist dieser ein im Korpus hängendes Pendel, zum Beispiel eine frei im Korpus hängende Kugel auf. Ein solches Pendel bewegt das Stroh im Raufutterspender immer dann, wenn dieser von den Tieren angestoßen wird. Damit ergibt sich ein von den Tieren beeinflussbarer Transport des Strohs zu den seitlichen Öffnungen. Mit dem dann für die Tiere seitlich entnehmbaren Stroh ergibt sich ein Belohnungseffekt und für die Tiere eine erhöhte und dauerhafte Motivation, den Raufutterspender zu nutzen.

Eine als Pendel fungierende Kugel hängt zum Beispiel unter einem Schäkel oder dergleichen, der auch zur Aufhängung des Raufutterspenders verwendet wird, und an einer dort fixierten Kette. Zum Aufhängen des Raufutterspenders werden bevorzugt mehrere Ketten oder dergleichen von entlang der Umfangslinie des Korpus regelmäßig beabstandeten Punkten weggeführt und mit gleichen oder zumindest im Wesentlichen gleichen Längen in einem Schäkel, einem Ring oder dergleichen zusammengeführt. Ein Aufhängen der Kugel unter einem solchen Schäkel bewirkt, dass die Kugel bei einem aufgehängten Raufutterspender mittig oder im Wesentlichen mittig im Korpus ohne Kontakt mit dem Boden des Korpus hängt. Wenn die Tiere gegen den Raufutterspender stoßen und diesen damit zum Pendeln bringen, bewegt sich die Kugel im Innern ebenfalls und bewirkt einen Transport des Raufutters zu den seitlichen Öffnungen (Entnahmelöchern). Die aufgehängte Kugel kommt dabei nicht dauerhaft in Kontakt mit dem Innenraum des Raufutterspenders, wie dies bei dem eingangs genannten Raufutterspender und der dortigen in den Innenraum eingelegten Metallkugel der Fall ist. Bei dem hier vorgestellten Raufutterspender werden folglich die mit einer frei beweglich eingelegten Metallkugel zu erwartenden Verschleißerscheinungen vermieden. Zudem kann die Kugel nicht verloren gehen.

Als Kugel kommt eine Kunststoffkugel in Betracht, insbesondere eine Kunststoffkugel mit einem Durchmesser von etwa 7,5 cm, zum Beispiel eine Kunststoffkugel, wie sie auch als Beißkugel für Schweine verwendet wird. Eine solche mittig im Korpus aufgehängte Kunststoffkugel hat sich ebenfalls als ausreichend erwiesen, um das Raufutter in Richtung auf die seitlichen Öffnungen (Entnahmelöcher) zu bewegen. Aufgrund eines Anstoßens der Kunststoffkugel an die Innenoberfläche des Korpus sind bei einem pendelnden Raufutterspender kaum Verschleißerscheinungen zu erwarten. Zudem ist eine Kunststoffkugel deutlich preiswerter als eine Metallkugel.

Bei einer besonderen Ausführungsform einer pendelnd in dem Raufutterspender aufgehängten Kugel ist vorgesehen, dass über die zum Aufhängen der Kugel bestimmte Kette ein Metallrohr geführt ist und dass das Metallrohr auf der Kugel aufliegt. Das Metallrohr erhöht das Gesamtgewicht des resultierenden Pendels, nämlich die Kombination aus Kugel, Kette und Metallrohr. Das im Vergleich zu einem nur in Form von Kette und Kugel bestehenden Pendel erhöhte Gewicht bewirkt, dass das schwere Pendel das im Raufutterspender befindliche Stroh eher verschiebt und zusammendrückt und damit in erhöhtem Maße eine Bewegung des Strohs im Innern des Raufutterspenders bewirkt. Solche Bewegungen führen dazu, dass das Stroh zu den Seiten des Raufutterspenders und dort zu den seitlichen Öffnungen gelangt, wo die Tiere es entnehmen können.

Zusätzlich zu einem solchen Rohr oder alternativ kann unter der Kugel oder direkt an der Kette ein scheibenförmiger Körper, zum Beispiel eine Kunststoffscheibe, mit einem Durchmesser von 10,0 cm bis 20,0 cm/25,0 cm, insbesondere 12,0 cm bis 14,0 cm, sowie einer Höhe im Bereich von zum Beispiel 1,0 cm bis 5,0 cm, insbesondere 1,0 cm bis 2,0 cm, angebracht sein. Das resultierende Pendel, das zumindest die Kette und die Scheibe sowie optional eine Kugel und/oder ein über die Kette geführtes Rohr umfasst, wird im Raufutterspender unter dem bereits genannten Schäkel so aufgehängt, dass die Scheibe den Boden des Raufutterspenders nicht berührt, insbesondere gerade nicht berührt, so dass das Pendel im Innern des Raufutterspenders frei schwingen kann. Die Scheibe wirkt mit ihren in der jeweiligen Pendelrichtung vorwärtsgewandten Mantelflächenabschnitten wie ein im Innern des Raufutterspenders bewegter Schieber und bewirkt, dass bei einem durch außen anstoßende Tiere bewegten Raufutterspender das im Innern befindliche Stroh zu den Seiten des Raufutterspenders und dort zu den seitlichen Öffnungen gelangt, wo die Tiere es entnehmen können. Ein eventuell über die Kette geführtes Rohr erhöht das Gesamtgewicht des Pendels und bewirkt - wie oben bereits beschrieben -, dass das schwere Pendel das im Raufutterspender befindliche Stroh stärker verschiebt und zusammendrückt und damit in erhöhtem Maße eine Bewegung des Strohs im Innern des Raufutterspenders bewirkt. Eine eventuell als Teil des Pendels fungierende Kugel erhöht ebenfalls das Gesamtgewicht des Pendels und bewirkt mit ihrem zusätzlichen Volumen ein zusätzliches Verschieben und Zusammendrücken des Strohs.

Bei einer nochmals weiteren Ausführungsform eines im Innern des Raufutterspenders angebrachten Pendels fungiert als Pendel ein im nicht ausgelenkten Zustand koaxial mit dem Korpus angeordneter Rohrabschnitt, der im Folgenden zur Unterscheidung von dem Korpus als Pendelrohr bezeichnet wird. Das Pendelrohr ist im Innern des Raufutterspenders unter dem Schäkel so aufgehängt, dass es auf dem Boden des Raufutterspenders aufliegt und bei eigenen Pendelbewegungen und/oder Pendelbewegungen des umgebenden Raufutterspenders in seiner Aufhängung kippt und dabei nur noch abschnittsweise mit seinem unteren Rand mit dem Boden des Raufutterspenders in Kontakt ist. Ein solches Pendelrohr und dessen Bewegung im Innern des Raufutterspenders hat zumindest die beiden folgenden Vorteile: Zum einen wirkt der in der jeweiligen Pendelrichtung vorwärtsgewandte Mantelflächenabschnitt des Pendelrohrs als Schieber für im Innern des Raufutterspenders befindliches Stroh, so wie dies weiter oben grundsätzlich bereits für die Ausführungsform des Pendels mit einer Scheibe beschrieben wurde. Zum anderen gibt das beim Pendeln im Innern des Raufutterspenders kippende Pendelrohr beim Kippen eine Öffnung für im Innern des Pendelrohrs befindliches Raufutter, insbesondere Stroh, frei. Bei einer Ausführungsform eines Raufutterspenders mit einem Pendel in Form eines Pendelrohrs kann das Stroh also zunächst in das Innere des Pendelrohrs gegeben werden. Wenn der Raufutterspender durch die Tiere hin- und hergestossen wird, gelangt aufgrund des im Rahmen seiner eigenen Pendelbewegungen kippenden Pendelrohrs Stroh aus dem Innern des Pendelrohrs in den umgebenden Raum des Raufutterspenders und wird dort durch das Pendelrohr zusammengeschoben und je nach Pendelrichtung des Raufutterspenders in Richtung auf dessen Öffnungen geschoben.

Für das Pendelrohr kommt ein Rohrabschnitt, insbesondere ein KG-Rohrabschnitt, mit einem Durchmesser von 10,0 cm bis 20,0 cm/25,0 cm, insbesondere 12,0 cm bis 14,0 cm, in Betracht. Die Höhe des Pendelrohrs kann bis zur Höhe des Korpus reichen. Je höher das Pendelrohr ist, desto mehr Stroh kann bei einer Befüllung des Raufutterspenders in das Innere des Pendelrohrs gegeben werden.

Bei einer besonderen Ausführungsform des Raufutterspenders sind der Korpus und dessen bodenseitiger Verschluss aus einem Kunststoffmaterial gefertigt. Auf diese Weise ergibt sich ein im Vergleich zu einer Verwendung anderer Materialien, zum Beispiel Metall, erheblich verringertes Gewicht. Das verringerte Gewicht ist günstig in Bezug auf ansonsten zu besorgende Verletzungsgefahren der Tiere oder Beschädigungen der Box und erleichtert das Aufhängen und Abnehmen des Raufutterspenders. Schließlich sind Kanten des aus einem Kunststoffmaterial gefertigten Raufutterspenders im Vergleich zu einem zum Beispiel aus Metall gefertigte Raufutterspender deutlich weniger verletzungsgefährlich, denn scharfkantige Grate oder dergleichen, wie sie sich speziell im Bereich der Öffnungen im Bodenbereich des Korpus ergeben, treten bei Kunststoff nicht auf. Zudem lassen sich die Oberflächen von aus einem Kunststoffmaterial gefertigten Korpus und Schieber besonders gut reinigen, entweder mit Wasser, zum Beispiel mittels eines Hochdruckreinigers, oder mit Wasser und zugesetzten Reinigungsmitteln.

Bei einer nochmals weiteren Ausführungsform eines im Wesentlichen aus Kunststoff gefertigten Raufutterspenders fungieren als Korpus ein Rohrabschnitt eines Kunststoffrohrs, zum Beispiel eines sogenannten Kanalgrundrohrs ("KG-Rohr") und als bodenseitiger Verschluss des Korpus eine zu dem Rohrabschnitt passende Kappe. Eine dauerhafte Verbindung zwischen dem Korpus und der Kappe lässt sich durch Verkleben mit einem Kunststoffkleber erreichen, zum Beispiel einem Kunststoffkleber, wie er beim Verarbeiten von KG-Rohren verwendet wird. Die durch Verkleben gewonnene einstückige Einheit aus Kunststoffrohr und Kunststoffkappe bewirkt eine Festigkeit des Raufutterspenders, welche für die bei der täglichen Verwendung resultierende Beanspruchung mehr als ausreichend ist. Eine Verwendung von KG-Rohr-Abschnitten und KG-Rohr-Kappen oder dergleichen macht den Raufutterspender zudem sehr preiswert und eine Herstellung ist schnell und unkompliziert möglich.

Die mit der Anmeldung eingereichten Ansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält der Anmelder sich vor, diese oder noch weitere, bisher nur in der Beschreibung und/oder Zeichnung offenbarte Merkmale oder Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Der erfindungsgemäße Raufutterspender kann im Vergleich zu der nachfolgend beschriebenen Dimensionierung auch größer oder kleiner ausgeführt sein.

Es zeigen
- Fig. 1: eine exemplarische Ausführungsform eines hier vorgeschlagenen Raufutterspenders,
- Fig. 2: einen zur Einstellung der Entnahmelöcher des Raufutterspenders bestimmten Schieber,
- Fig. 3: eine Ausführungsform eines Raufutterspenders gemäß Fig. 1 mit einem zum Bewegen des Raufutters im Innern bestimmten Pendel,
- Fig. 4: bis
- Fig. 6: weitere Ausführungsformen eines zum Bewegen des Raufutters im Innern des Raufutterspenders bestimmten Pendels.

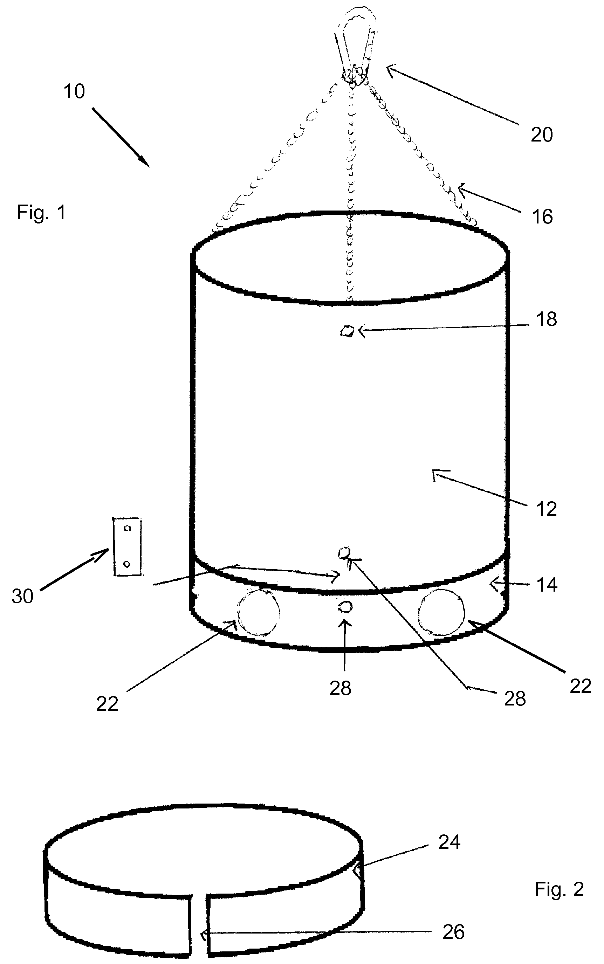

Die Darstellung in Figur 1 zeigt beispielhaft eine Ausführungsform der hier und im Folgenden als Raufutterspender 10 oder Strohautomat bezeichneten Vorrichtung zum Abgeben von Raufutter an Nutzvieh, insbesondere Schweine, in einem Stall oder Stallabschnitt (Box).

Der Futterspender 10 umfasst einen zur Aufnahme des Raufutters bestimmten Korpus 12, der mittels einer Kappe 14 bodenseitig geschlossen ist. Als Korpus 12 kommt ein etwa 40 cm langes sogenanntes KG-Rohr mit einer DN300 Nennweite in Betracht, wobei selbstverständlich auch größere oder kleinere Abmessungen denkbar und praktikabel sind und hier und im Folgenden genannte Maße lediglich exemplarisch angegeben werden und keinesfalls einschränkend auszulegen sind. Bei einem als Korpus 12 fungierenden KG-Rohr-Abschnitt kommt als Kappe 14 eine zu der jeweiligen Nennweite passende KG-Kappe in Betracht, also zum Beispiel eine KG-Kappe DN300 mit einer Höhe von ca. 7,5 cm. Der Korpus 12 ist bei der gezeigten Ausführungsform in die Kappe 14 eingeklebt. Dadurch resultiert ein einstückiger, oben offener tonnenförmiger Behälter. Dieser lässt sich mittels hier drei Ketten 16, die von entlang der Umfangslinie des Korpus 12 regelmäßig beabstandeten Schrauben 18 an der Oberseite des Korpus 12 ausgehen und mittig über dem Korpus 12 mittels eines Schäkels 20 oder dergleichen zusammengefasst sind, in einer Box zum Beispiel für Mastschweine frei pendelnd aufhängen.

Im Bodenbereich des Behälters befinden sich entlang der Umfangslinie regelmäßig beabstandete und als Entnahmelöcher für das im Behälter befindliche Raufutter fungierende Öffnungen 22. Bei der gezeigten Ausführungsform durchdringen die Öffnungen einerseits den ringförmigen Rand der Kappe 14 und die darunter liegende Mantelfläche des Korpus 12. Obwohl die Öffnungen 22 hier als runde, zum Beispiel mittels eines sogenannten Kreisschneiders erhältliche Bohrungen gezeigt sind, kommen grundsätzlich auch andere Konturen in Betracht, zum Beispiel eine rechteckige oder quadratische Kontur. Bei der gezeigten Ausführungsform sind die Öffnungen 22 etwa 5 cm breit und enden mit ihrer Unterkante unmittelbar über dem Boden des Behälters, so dass im Innern des Behälters befindliches Raufutter ohne eine hindernde Schwelle oder im Wesentliche ohne eine solche Schwelle aus dem Behälter herausragen kann.

Unterhalb der Darstellung in Figur 1 ist in Figur 2 ein als Schieber 24 fungierender und an einer Stelle in axialer Richtung getrennter Ring gezeigt. Bei der gezeigten Ausführungsform ist vorgesehen, dass der Schieber 24 in Innern des Korpus 12 platziert wird. Dort ist der Schieber 24 relativ zum Korpus 12 axial beweglich. Mittels des Schiebers 24 lassen sich in Abhängigkeit von dessen axialer Position im Korpus 12 die Öffnungen 22 ganz oder teilweise verschließen. Je weiter der Schieber 24 in Richtung auf den Boden des Behälters, hier also den Boden der Kappe 14, bewegt wird, desto kleiner wird eine wirksame Größe der Öffnungen 22. Wenn der Schieber 24 in umgekehrter Richtung bewegt wird, also vom Boden des Behälters weg, erhöht sich die wirksame Größe der Öffnungen 22 und sobald sich der Schieber 24 oberhalb der Oberkante der Öffnungen 22 befindet, resultiert eine der Größe der Öffnungen 22 entsprechende maximale wirksame Größe der Öffnungen 22. Als wirksame Größe der Öffnungen 22 wird dabei die tatsächliche Fläche der Öffnungen 22 abzüglich eines eventuell mittels des Schiebers 24 abgedeckten Flächenabschnitts verstanden.

Bei einem aus einem Rohrabschnitt, insbesondere einem KG-Rohr-Abschnitt, erhaltenen Korpus 12 kommt für den Schieber 24 die Verwendung eines weiteren Abschnitts desselben Rohrs oder zumindest eines Rohrs mit einem identischen oder ähnlichen Durchmesser in Betracht. Aufgrund der Auftrennung resultiert ein im Rahmen der Materialeigenschaften federnder, einseitig offener Ring, bei der gezeigten Ausführungsform zum Beispiel ein Ring mit einer Höhe von etwa 10 cm. Dieser kann - anders als oben zur Erläuterung der gezeigten Ausführungsform beschrieben - um die Außenoberfläche des Korpus 12 gelegt werden. Der Ring/Schieber 24 legt sich aufgrund der Federkraft an die Außenoberfläche des Korpus 12 an und ist dort in axialer Richtung beweglich. Zum Verändern der wirksamen Größe der Öffnungen 22 ist anstelle einer bodenseitigen Kappe 14, die mit ihrem umlaufenden Rand den Außendurchmesser des Behälters erhöht, eine bodenseitige Kappe mit einem höheren umlaufenden Rand oder ein einseitiger Verschluss des Behälters erforderlich, bei dem zumindest in einem für die axiale Bewegung des Schiebers 24 erforderlichen Abschnitt ein einheitlicher Außendurchmesser des Behälters resultiert, zum Beispiel indem eine zum Innendurchmesser des Korpus 12 passende Kappe in das Innere des Korpus 12 eingeklebt wird.

Die nachfolgende Beschreibung wird anhand der exemplarisch gezeigten Ausführungsform fortgesetzt. Dort ist vorgesehen, dass sich der Schieber 24 im Innern des Korpus 12 (in Innern des Behälters) befindet und dort axial beweglich sowie gegen Beschädigungen und Verschmutzungen besonders gut geschützt ist. Damit der Schieber 24 in das Innere des Behälters eingesetzt werden kann, ist die axiale Trennung des den Schieber 24 bildenden Rings in Form einer Aussparung 26, hier in Form einer etwa 1 cm breiten Aussparung 26, ausgeführt. Der in das Innere des Behälters eingesetzte Schieber 24 legt sich mit seiner Außenoberfläche und unter Federkraft formschlüssig an die Inneroberfläche des Korpus 12 an. Die Breite der Aussparung 26 ist so gewählt, dass auch bei einem in den Behälter eingesetzten Schieber 24 der Schaft zumindest einer von der Außenseite des Behälters in das Innere geführten Schraube zwischen die beiden einander zugewandten Ringenden des Schiebers 24 passt. Auf diese Weise kann der Schieber 24 bei einer axialen Bewegung im Innern des Behälters zur Anpassung der wirksamen Größe der Öffnungen 22 axial entlang des Schafts der mindestens einen Schraube bewegt werden. Mittels einer auf das Gewinde der mindestens einen Schraube aufgesetzten Gewindemutter kann der Schieber 24 durch Anziehen der Gewindemutter in der jeweiligen axialen Position fixiert werden, so dass auf diese Weise auch die jeweils eingestellte wirksame Größe der Öffnungen 22 fixiert wird. Eine derartige mindestens eine Schraube fungiert als Klemmvorrichtung und ist ein Beispiel für Mittel zum stufenlosen Fixieren des Schiebers 24 in unterschiedlichen axialen Positionen. Bei der gezeigten Ausführungsform sind für die Klemmvorrichtung zwei Schrauben 28 vorgesehen, die auf der Innenseite des Behälters ein entlang der Schraubenschäfte bewegliches Flacheisen 30, zum Beispiel ein Aluflacheisen, tragen, das mit seiner in Richtung auf die Behälterinnenfläche gewandten Oberfläche an beiden Enden des Schiebers 24 anliegt. Das Flacheisen 30 ist mit Gewindemuttern, insbesondere selbstsichernden Gewindemuttern, gesichert und beim Anziehen der Gewindemuttern wird das Flacheisen auf die Enden des Schiebers 24 gepresst, wodurch die jeweilige axiale Position des Schiebers 24 im Innern des Behälters fixiert wird. Die beiden exemplarisch gezeigten Schrauben 28 der Klemmvorrichtung sind in einer vom Behälterboden gemessenen Höhe von ca. 6 cm bzw. ca. 10,5 cm angebracht. Die Maße des Flacheisens 30 betragen ca. 4,0 cm mal 8,0 cm. Sämtliche hier angegebenen Maße sind lediglich als Beispiele zu verstehen.

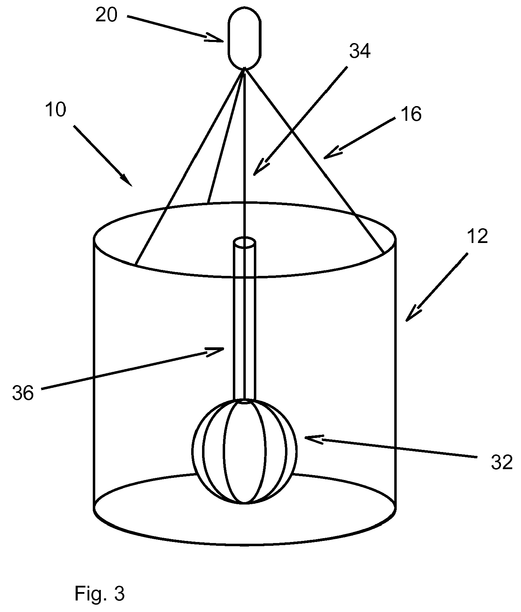

Die Darstellungen in Figur 3 bis Figur 6 zeigen unterschiedliche Ausführungsformen des Raufutterspenders 10 mit einem frei im Korpus 12 hängenden und bis in einen Bereich von dessen Bodenabschnitt reichenden Pendel, und zwar zunächst (Fig. 3) ein Pendel in Form einer frei im Korpus 12 im Bereich von dessen Bodenabschnitt hängenden Kugel 32, zum Beispiel einer Kugel 32 in Form einer Kunststoffkugel 32, wie sie als Beißkugel in der Nutztierhaltung bekannt ist. Die Kugel 32 - oder allgemein das Pendel - hängt an einer Kette 34 oder dergleichen unter dem zur Aufhängung des Raufutterspenders 10 wirksamen Schäkel 20. Auf diese Weise ist das Pendel im Innern des Raufutterspenders 10 (im Innern des Korpus 12) zentriert. Aufgrund einer geeigneten Länge des Pendels ist bei zum Beispiel einer Kugel 32 als Pendel gewährleistet, dass diese frei über dem Boden des Raufutterspenders 10 pendeln kann. Ein optionales, über die Kette 34 geführtes und auf der Kugel 32 aufliegendes Metallrohr 36 sorgt für ein zusätzliches Gewicht des Pendels.

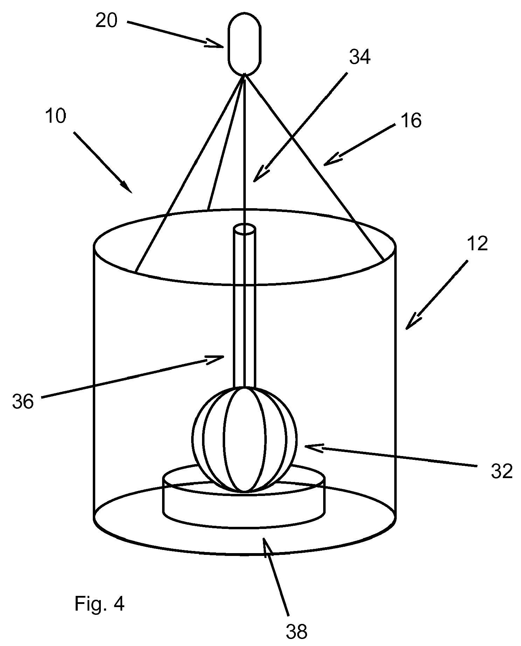

Die Darstellung in Figur 4 zeigt ein Pendel wie in Figur 3 mit einer zusätzlichen Scheibe 38 unterhalb der Kugel 32. Die Scheibe 38 wirkt bei einer Bewegung des Pendels im Innern des Korpus 12 mit ihrem in der jeweiligen Pendelrichtung vorwärtsgewandten Mantelflächenabschnitt als Schieber für im Innern des Raufutterspenders 10 befindliches Stroh. Die Kugel 32 ist bei dieser Ausführungsform des Pendels grundsätzlich optional, erhöht aber in vorteilhafter Weise das Gesamtgewicht des Pendels. Das ebenfalls optionale Rohr 36 kann zusätzlich oder alternativ zur Erhöhung des Gesamtgewichts des Pendels verwendet werden.

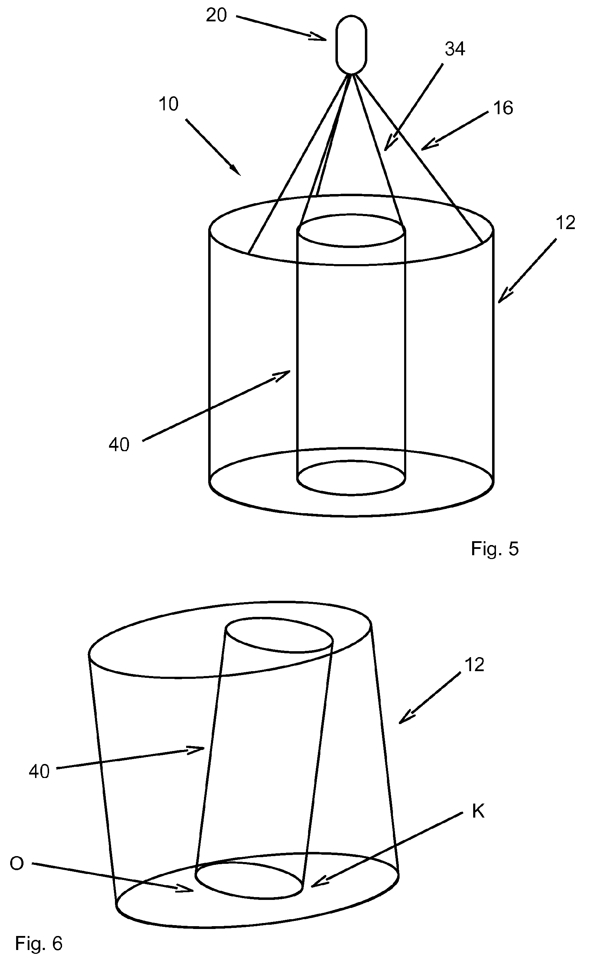

Die Darstellungen in Figur 5 und Figur 6 zeigen eine besondere Ausführungsform eines Raufutterspenders 10 mit einem frei im Korpus 12 hängenden und bis in einen Bereich von dessen Bodenabschnitt reichenden Pendel. Als Pendel fungiert dabei ein Pendelrohr 40, nämlich ein Pendel in Form eines koaxial oder zumindest im Wesentlichen koaxial zum Korpus 12 orientierten Rohrabschnitts. Das Pendelrohr 40 hängt unter dem Schäkel 20 an zumindest zwei Ketten 34, deren Anschlagpunkte einander am oberen Rand des Pendelrohrs 40 gegenüberliegen, also um 180° zueinander versetzt sind. Das Pendelrohr 40 hat bevorzugt eine Höhe, die im Wesentlichen der Höhe des Korpus 12 entspricht und das Pendelrohr 40 ist im nicht ausgelenkten Zustand, also wenn der Raufutterbehälter 10 und das Pendelrohr 40 in Ruhe sind und nicht schwingen, mit seiner Unterkante gerade nicht mit dem Boden des Korpus 12 oder gerade mit dem Boden des Korpus 12 in Kontakt. Die Darstellung in Figur 6 soll den eingangs erläuterten Aspekt des Kippens des Pendelrohrs 40 im Korpus 12 veranschaulichen. Wenn der Raufutterspender 10 von den Tieren angestoßen wird, pendelt dieser unter seiner Aufhängung, zum Beispiel dem Schäkel 20, und den Ketten 16 (in Figur 6 nicht gezeigt). Mit einer solchen Bewegung des Korpus 12 des Raufutterspenders 10 geht auch eine Bewegung des Pendelrohrs 40 im Innern des Korpus 12 einher. Dieses pendelt ebenfalls an seinen Ketten 34 (in Figur 6 gleichfalls nicht gezeigt), kippt aber über seinen unteren Rand, denn es ist im nicht ausgelenkten Zustand gerade im Kontakt oder gerade nicht im Kontakt mit dem Boden des Korpus 12. An der in der Darstellung in Figur 6 mit "K" gekennzeichneten Stelle ist das Pendelrohr 40 noch in Kontakt mit dem Boden. Das Pendelrohr 40 kippt über diesen Punkt. An der gegenüberliegenden und mit "O" gekennzeichneten Seite ergibt sich eine Öffnung mit einer maximalen Öffnungsweite zum Innern des Pendelrohrs 40. Aufgrund dieses Kippens ergibt sich für in das Innere des Pendelrohrs 40 gegebenes Stroh die Möglichkeit, aus dem Innern des Pendelrohrs 40 in das Innere des Korpus 12 auszutreten. Dort wird das Stroh - genau wie oben für die Ausführungsform mit einer Scheibe 38 als Pendel erläutert - mit dem in der jeweiligen Pendelrichtung vorwärtsgewandten und als Schieber für im Innern des Raufutterspenders 10 befindliches Stroh wirksamen Mantelflächenabschnitt zum Rand des Korpus 12 und den dortigen Öffnungen 22 (Fig. 1) geschoben. Beim Befüllen des Raufutterspenders 10 mit Stroh wird das Stroh bevorzugt nur in das Innere des Pendelrohrs 40 gegeben. Das Pendelrohr 40 ist dann gleichermaßen zur schrittweisen Abgabe des Strohs in das Innere des Korpus 12 und zum Schieben des Strohs in Richtung auf die Öffnungen 22 im Korpus 12 wirksam.

Einzelne im Vordergrund stehende Aspekte der hier vorgelegten Beschreibung lassen sich damit kurz wie folgt zusammenfassen: Angegeben wird ein Raufutterspender 10 mit einem zentralen, zur Aufnahme des Raufutters bestimmten und bodenseitig geschlossenen Korpus 12, wobei der Korpus 12 in seiner Mantelfläche am bodenseitigen Ende zumindest eine Öffnung 22 aufweist und sich durch einen relativ zum Korpus 12 axial beweglichen Schieber 24 auszeichnet, wobei mittels des Schiebers 24 in Abhängigkeit von dessen axialer Position die oder jede Öffnung 22 ganz oder teilweise verschließbar ist. Die Erfindung ist damit ein Raufutterspender 10, der sich gut reinigen lässt, einfach zu montieren und zu warten sowie preiswert in der Herstellung ist. Speziell bei einem in Innern des Korpus 12 angebrachten und dort axial beweglichen Schieber 24 ergibt sich eine weitgehend kantenfreie Außenoberfläche des Behälters (Korpus 12 + Kappe 14). Bei einem außen über die Mantelfläche des Korpus 12 greifenden Rings der Kappe 14 kann die resultierende Kante mittels eines Kunststofffugenmaterials begradigt werden. Äußere Verschmutzungen, wie sie sich bei der Verwendung im Stall ergeben, lassen sich leicht abwischen oder abwaschen. Es dringen kaum Verunreinigungen in das Innere des Behälters. Für eine besonders gründliche Reinigung des Raufutterspenders 12 kann dieser einfach abgehängt und der Schieber 24 entnommen werden. Danach können der Behälter von außen und von innen und ebenso der ringförmige Schieber 24 auf seinen beiden Oberflächen gereinigt werden, zum Beispiel mittels eines Hochdruckreinigers. Die dafür notwendige Demontage des Raufutterspenders 10 beschränkt sich auf ein Lösen der Klemmvorrichtung und ist in wenigen Augenblicken erfolgt. Die reduzierte Verschmutzungsgefahr und die unkomplizierte Möglichkeit zum Reinigen des Raufutterspenders 10 erlauben eine Konformität mit aktuellen und zukünftigen Hygieneanforderungen.

Die bevorzugt zylindrische Form des Raufutterspenders 10 hilft Verletzungen der Tiere zu vermeiden und reduziert die Gefahr von Beschädigungen der Seitenwände der Box. Aufgrund der Einstellbarkeit der wirksamen Größe der Öffnungen 22 ergibt sich ein gut einstellbarer Strohnachlauf. Die Tiere entnehmen jeweils nur geringe Strommengen. Dies hilft Verstopfungen des Güllekanals zu vermeiden. Der Raufutterspender 10 lässt sich im Stall einfach und vom Gang aus nachfüllen. Die beispielhaft genannten Materialien sorgen für eine lange Lebensdauer. Zum Anbringen in einer Box kann der Raufutterspender 10 an einer Haltestange oder dergleichen aufgehängt werden. Der Boden des Raufutterspender 10 sollte sich im aufgehängten Zustand etwa 45-50 cm über dem Boden der Box befinden, so dass die Tiere den Raufutterspender 10 erreichen, andererseits aber auch noch unter dem Raufutterspender 10 stehen können. Dies gewährleistet, dass der von einem Tier angestoßene Raufutterspender 10 im Wesentlichen frei pendeln kann, ohne dass ein anderes stehendes Tier von diesem getroffen wird.

### Bezugszeichenliste

- 10: Raufutterspender
- 12: Korpus
- 14: Kappe
- 16: Kette
- 18: Schraube
- 20: Schäkel
- 22: Öffnung
- 24: Schieber
- 26: Aussparung
- 28: Schraube
- 30: Flacheisen
- 32: Kugel
- 34: Kette
- 36: Metallrohr
- 38: Scheibe
- 40: Pendelrohr

## Patentansprüche

1. Raufutterspender (10) mit einem zentralen, zur Aufnahme des Raufutters bestimmten und bodenseitig geschlossenen Korpus (12), wobei der Korpus (12) in seiner Mantelfläche am bodenseitigen Ende zumindest eine Öffnung (22) aufweist, **gekennzeichnet durch** einen relativ zum Korpus (12) axial beweglichen Schieber (24), wobei mittels des Schiebers (24) in Abhängigkeit von dessen axialer Position die oder jede Öffnung (22) ganz oder teilweise verschließbar ist.

2. Raufutterspender (10) nach Anspruch 1, wobei der Schieber (24) innen im Korpus (12) angebracht ist.

3. Raufutterspender (10) nach Anspruch 2, mit einem zylindrischen Korpus (12) und einem ebenfalls zylindrischen Schieber (24), wobei der Schieber (24) koaxial zum Korpus (12) angebracht ist und beim axialen Bewegen auf der Außenoberfläche oder der Innenoberfläche des Korpus (12) läuft.

4. Raufutterspender (10) nach Anspruch 3, wobei der zylindrische Schieber (24) aus einem Rohrabschnitt mit demselben oder im Wesentlichen demselben Durchmesser wie der Korpus (12) gefertigt ist, wobei die resultierende Zylindermantelfläche des Schiebers (24) in axialer Richtung aufgetrennt ist und wobei der Schieber (24) zur axialen Bewegung auf der Außenoberfläche des Korpus (12) aufgespreizt und um die Außenoberfläche des Korpus (12) gelegt ist oder zur axialen Bewegung auf der Innenoberfläche des Korpus (12) gestaucht und im Innern des Korpus (12) an dessen Innenoberfläche angelegt ist.

5. Raufutterspender (10) nach einem der vorangehenden Ansprüche, mit Mitteln zum Fixieren des Schiebers (24) in unterschiedlichen axialen Positionen.

6. Raufutterspender (10) nach Anspruch 5, wobei als Mittel zum Fixieren des Schiebers (24) in unterschiedlichen axialen Positionen eine Klemmvorrichtung fungiert, welche den Schieber (24) auf die Oberfläche des Korpus (12) presst.

7. Raufutterspender (10) nach Anspruch 6, wobei die Klemmvorrichtung mittels zumindest einer Schraube (28) lösbar und arretierbar ist.

8. Raufutterspender (10) nach einem der vorangehenden Ansprüche, mit einem frei im Korpus (12) hängenden und bis in einen Bereich von dessen Bodenabschnitt reichenden Pendel.

9. Raufutterspender (10) nach Anspruch 8, mit einem Pendel in Form einer frei im Korpus (12) im Bereich von dessen Bodenabschnitt hängenden Kugel (32).

10. Raufutterspender (10) nach Anspruch 9, wobei als Kugel (32) eine Kunststoffkugel fungiert.

11. Raufutterspender (10) nach Anspruch 8, mit einem Pendel in Form einer frei im Korpus (12) im Bereich von dessen Bodenabschnitt hängenden Scheibe (38).

12. Raufutterspender (10) nach einem der Ansprüche 8 bis 11, mit einem über eine als Aufhängung des Pendels wirksamen Kette (34) geführten Metallrohr (36).

13. Raufutterspender (10) nach Anspruch 8, mit einem Pendel in Form eines im Wesentlichen koaxial zum Korpus (12) orientierten Rohrabschnitts (40), das mit seiner Unterkante im nicht ausgelenkten Zustand gerade mit dem Boden in Kontakt ist.

14. Raufutterspender (10) nach einem der vorangehenden Ansprüche, wobei der Korpus (12) und dessen bodenseitiger Verschluss aus einem Kunststoffmaterial gefertigt sind.

15. Raufutterspender (10) nach einem der vorangehenden Ansprüche, wobei als Korpus (12) ein Rohrabschnitt und als bodenseitiger Verschluss des Korpus (12) eine zu dem Rohrabschnitt passende Kappe (14) fungieren.
